# EUROPÄISCHE PATENTANMELDUNG

(11) **EP 3 978 206 A1**
(43) Veröffentlichungstag der Anmeldung: **06.04.2022**
(21) Anmeldenummer: 21197119.7
(22) Anmeldetag: 16.09.2021
(51) Int. Cl.: B25J 11/00, B25J 15/04, H02B 3/00

(54) **ANORDNUNG FÜR DIE BEARBEITUNG EINES SCHALTSCHRANKGEHÄUSES ODER EINES SCHALTSCHRANKFLACHTEILS**

(30) Priorität: 22.09.2020 DE 102020124972
(71) Anmelder: Rittal GmbH & Co. KG, 35745 Herborn (DE)
(72) Erfinder: Baechler, Andreas Michael, 35708 Haiger (DE)
(74) Vertreter: Angerhausen, Christoph

(57) **Zusammenfassung**

Die Erfindung betrifft eine Anordnung für die Bearbeitung eines Schaltschrankgehäuses oder eines Schaltschrankflachteils, mit einem Roboter (100) und einem von dem Roboter (100) gehaltenen Werkzeugmodul (1), das ein Werkzeuggerät (2) mit einem angetriebenen Werkzeug (3) für die Bearbeitung eines Werkstoffs aufweist, wobei das Werkzeuggerät (2) an einem Werkzeughalter (4) lösbar befestigt ist, dadurch gekennzeichnet, dass der Werkzeughalter (4) an seiner Außenseite eine Kupplung (5) für die Verbindung des Werkzeughalters (4) mit dem Roboter (100) und für die Trennung des Werkzeughalters (4) von dem Roboter (100) aufweist.

## Beschreibung

Die Erfindung geht aus von einer Anordnung für die Bearbeitung eines Schaltschrankgehäuses oder eines Schaltschrankflachteils, wobei die Anordnung einen Roboter und ein von dem Roboter gehaltenes Werkzeugmodul aufweist, das ein Werkzeuggerät mit einem angetriebenen Werkzeug für die Bearbeitung eines Werkstoffs aufweist, und wobei das Werkzeuggerät an einem Werkzeughalter lösbar befestigt ist. Eine derartige Anordnung ist aus der EP 3 223 997 B1 bekannt.

Schaltschrankgehäuse und Schaltschrankflachteil sind häufig aus Metall und seltener aus Kunststoff gefertigt. Für die Individualisierung der Bauteile, etwa für den Aufbau einer anwendungsspezifischen elektrischen Schaltanlage, ist es erforderlich, dass diese Bauteile mit Ausbrüchen, Bohrungen, Gewinden, Zuschnitten und dergleichen versehen werden, oder dass an dem Schaltschrankgehäuse oder dem Schaltschrankflachteil eine Komponente befestigt werden muss, beispielsweise durch Nieten oder Schrauben. Dementsprechend ist der Werkzeugeinsatz aufwendig, wobei auf eine Vielzahl unterschiedlichster Werkzeuge zurückgegriffen werden muss, sei es bei der im Wesentlichen manuell ausgeführten Bearbeitung der genannten Bauteile, oder bei der automatisierten Bearbeitung dieser.

Die aus dem Stand der Technik bekannten Anordnungen für die automatisierte oder teilautomatisierte Bearbeitung von Schaltschrankflachteilen und Schaltschrankgehäusen haben den Nachteil, dass sie aufgrund des oben beschriebenen, erheblichen Funktionsumfang, sofern dieser überhaupt in einer einzigen Anlage umgesetzt werden kann, vergleichsweise aufwendig aufgebaut und damit kostenintensiv in der Anschaffung und im Betrieb sind. Dies hat zur Folge, dass die Produkte aus Rentabilitätsgründen nur von einem auf hohen Durchsatz ausgerichteten Anwenderkreis angenommen werden, sodass für die Bearbeitung von Schaltschrankgehäusen und Schaltschrankflachteilen in kleineren Losgrößen häufig die manuelle Bearbeitung der Bauteile erfolgt, was wiederum einen hohen Lohnkosteneinsatz sowie eine vergleichsweise höhere Fehleranfälligkeit bedingt.

Es ist daher die Aufgabe der Erfindung, eine Anordnung der eingangs beschriebenen Art derart weiterzuentwickeln, dass sie einerseits kostengünstig in der Realisierung ist und andererseits die maschinellen Vorteile der Serienfertigung insbesondere hinsichtlich Produktivität und Qualität aufweist.

Diese Aufgabe wird durch eine Anordnung mit den Merkmalen des Anspruchs 1 gelöst. Die abhängigen Ansprüche betreffen jeweils vorteilhafte Ausführungsformen der Erfindung.

Demgemäß ist bei der eingangs beschriebenen Anordnung vorgesehen, dass der Werkzeughalter an seiner Außenseite eine Kupplung für die Verbindung der Werkzeughalter mit dem Roboter und für die Trennung des Werkzeughalters von dem Roboter aufweist. Der Roboter kann beispielsweise ein Roboter sein, der ohnehin in einer bestehenden Industriefertigungsanlage vorhanden ist, etwa für die Bestückung von Montageplatten mit Schaltanlagenkomponenten, für die Verdrahtung der Komponenten, oder für ähnliche automatisierte Arbeiten bei der Herstellung von elektrischen Schaltanlagen. Der Roboter kann beispielsweise mit seinem Endeffektor und einem daran angeordneten Greifer das von dem Werkzeughalter gehaltene Werkzeug an der Kupplung des Werkzeughalters greifen, um es beispielsweise für die Bearbeitung eines Flachteils oder eines Schaltschrankgehäuses der entsprechenden Komponente zuzuführen.

Der Roboter kann demgemäß beispielsweise ein Knickarmroboter sein, der einen als Greifer ausgebildeten Endeffektor aufweist. Die Kupplung des Werkzeughalters kann ein Adapterstück mit einer Außengeometrie aufweisen, die einem Negativ einer Greifergeometrie an einer Innenseite eines Greifers des Roboters entspricht. Demgemäß kann ein Formschluss zwischen dem Greifer und dem Werkzeughalter ausgebildet sein, wenn der Greifer den Werkzeughalter an der Kupplung hält. Ein Greifer mit einer geeigneten Greifergeometrie ist in der nachveröffentlichten DE 10 2019 123 245 A1 beschrieben.

Der Greifer kann zwei Greiferbacken aufweisen, deren Abstand zueinander über eine Linearstelleinheit einstellbar ist. Die Greiferbacken können plattenförmig ausgebildet sein und eine Dicke in Verstellrichtung der Greiferbacken zueinander aufweisen, die wesentlich kleiner als eine Breite und eine Höhe der Greiferbacken senkrecht zueinander und senkrecht zu der Dicke ist. Die Dicke kann vorzugsweise weniger als ein Fünftel und besonders bevorzugt weniger als ein Zehntel mindestens eines von Höhe und Breite der Greiferbacken betragen.

Die Greifergeometrie kann mindestens eine Ausnehmung aufweisen, die zu einer endseitigen Stirnseite und/oder zu einer Längsseite einer Greiferbacke des Greifers offen ist. Die Ausnehmung kann eine konturierte Ausnehmung sein, die bei beiden Greiferbacken sowohl zu der endseitigen Stirnseite als auch zu der Längsseite der Greiferbacke offen ist.

Die Greiferbacken können mindestens ein Paar sich gegenüberstehender identischer Ausnehmungen an ihren der jeweils gegenüberliegenden Greiferbacke zugewandten Innenseite aufweisen.

Mindestens eine der Greiferbacken kann an ihrer der jeweils gegenüberliegenden Greiferbacke zugewandten Innenseite eine Nut aufweisen, die sich entlang einer endseitigen Stirnseite der Greiferbacke erstreckt. Die Nut kann in eine Ausnehmung an einer der jeweils gegenüberliegenden Greiferbacke zugewandten Innenseite der Greiferbacke münden. Die Ausnehmung kann eine Ausnehmung der Greifergeometrie sein.

Das Adapterstück kann einteilig an den Werkzeughalter angeformt sein. Der Werkzeughalter kann ein Gehäuse des Werkzeuggeräts umgreifen oder von gegenüberliegenden Seiten des Gehäuses des Werkzeuggeräts an dem Gehäuse anliegen. Der Werkzeughalter kann eine Montageseite aufweisen, auf welcher das Werkzeuggerät montiert ist. Dazu kann das Werkzeuggerät eine Aufstandsszeit aufweisen, über welche das Werkzeuggerät auf der Montageseite aufsteht. Die Aufstandsseite kann beispielsweise eine Aufstandsseite eines Hubkorbs des Werkzeuggeräts sein.

Das Werkzeuggerät kann ein Werkzeuggerät für die Einhandbedienung oder für die Zweihandbedienung sein. Das Werkzeuggerät kann beispielsweise eine Handbohrmaschine, ein Handnietgerät, ein Gewindeschneidgerät, oder eine Oberfräse sein. Bei dieser Ausführungsform wird erreicht, dass Werkzeuggeräte erfindungsgemäß angewendet werden können, die handelsüblich sind, sodass für die Umsetzung der erfindungsgemäßen Prinzipien gemäß dieser Ausführungsform keine speziellen Werkzeuggeräte erforderlich sind. Die Adaptierung dieser Werkzeuggeräte wird vielmehr mithilfe des erfindungsgemäß vorgesehenen Werkzeughalters erreicht, der an seiner Außenseite eine Kupplung für die Verbindung des Werkzeughalters aufweist. Wenn der Roboter beispielsweise ein produktionsseitig im Schaltanlagenbau ohnehin vorhandener Mehr-Achsen-Knickarmroboter ist, der einen als Greifer ausgebildeten Endeffektor aufweist, ist einerseits eine einfache Kopplung des Werkzeuggeräts und damit die einfache Austauschbarkeit des Werkzeuggeräts sowie andererseits die Verwendung handelsüblicher und entsprechend einfach zu beziehender Werkzeuggeräte möglich.

Der Werkzeughalter kann zweiteilig ausgeführt sein. Demgemäß kann er eine erste und eine zweite Werkzeughalterhälfte aufweisen, die ein Gehäuse des Werkzeuggeräts an gegenüberliegenden Seiten einfasst. Dabei können die Werkzeughalterhälften vorzugsweise als Gleichteile ausgebildet sein, wodurch die Montage des Werkzeughalters an dem Werkzeuggerät vereinfacht wird.

Die Werkzeughalterhälften können beispielsweise am Übergang eines Spannfutters für das Werkzeug in das Gehäuse miteinander verbunden sein. Der Werkzeughalter bzw. die Werkzeughalterhälften können jedoch grundsätzlich auch in anderer Weise an die Geometrie des Werkzeuggeräts, insbesondere an die Geometrie eines Gehäuses des Werkzeuggeräts angepasst sein, um eine möglichst einfache und kraftschlüssige Verbindung des Werkzeughalters mit dem Werkzeuggerät zu ermöglichen, sodass dieses prozesssicher von dem Roboter manövriert und bedarfsweise mit diesem gekoppelt sowie von diesem abgekoppelt werden kann.

Die Werkzeughalterhälften können an der Kupplung lösbar miteinander verbunden sein und dazu vorzugsweise jeweils ein Teilstück des Adapterstücks je Werkzeughalterhälfte aufweisen. Mithin kann das Adapterstück mehrteilig ausgebildet sein, wobei mindestens ein Teilstück des Adapterstücks an jeder der beiden Werkzeughalterhälften ausgebildet ist, beispielsweise an einer Außenseite der Werkzeughalterhälfte, die einer entsprechenden korrespondierenden Außenseite, an welcher mindestens ein weiteres Teilstück des Adapterstück ausgebildet ist, im montierten Zustand der Werkzeughalterhälften gegenüberliegend angeordnet ist.

Wenn ein Adapterstück der Kupplung eine Außengeometrie aufweist, die einem Negativ einer Greifergeometrie an einer Innenseite eines Greifers des Roboters entspricht, kann die Außengeometrie anteilig an der ersten und anteilig an der zweiten Werkzeughälfte ausgebildet sein.

Der Werkzeughalter mit der Kupplung kann eine Flanschplatte aufweisen, auf der das Werkzeuggerät montiert ist und die eine Aufstandsfläche aufweist, über die das Werkzeuggerät auf einem zu bearbeitenden Werkstück aufgesetzt werden kann.

Dabei kann die Flanschplatte an einer von der Aufstandsfläche abgewandten Seite ein erhabenes Adapterstück der Kupplung aufweisen, das vorzugsweise einteilig an die Flanschplatte angeformt ist und eine Außengeometrie aufweist, die einem Negativ einer Greifergeometrie an einer Innenseite eines Greifers des Roboters entspricht. Das Adapterstück kann auch auswechselbar ausgebildet sein, um die Kupplung, insbesondere das Adapterstück der Kupplung, an die Greifergeometrie anpassen zu können.

Die Flanschplatte kann an einer von der Aufstandsfläche abgewandten Seite eine Montagefläche aufweisen, auf der ein Hubkorb des Werkzeuggeräts, beispielsweise ein Hubkorb einer Oberfräse, einer Bohrmaschine, oder einer Gewindeschneidmaschine, montiert ist.

Der Werkzeughalter kann eine Aufstandsfläche aufweisen, über welche das Werkzeugmodul auf einem zu bearbeitenden, flächigen Werkstück aufsteht, wobei das Werkzeugmodul eine pneumatisch, hydraulisch oder elektrisch angetriebene Hub- und Senkeinrichtung aufweist, mithilfe welcher das Werkzeuggerät oder zumindest ein Werkzeug des Werkzeuggeräts senkrecht zu der Aufstandsfläche verstellt werden kann.

Das Werkzeugmodul kann ein Halteelement aufweisen, über das eine Linearstelleinheit, beispielsweise ein Pneumatik- oder Hydraulikzylinder, an einem Hubkorb des Werkzeuggeräts befestigt ist. Dabei kann ein linearverstellbarer Kolben der Linearstelleinheit in Verstellrichtung des Hubkorbs verstellbar und mit seinem freien Ende an dem Werkzeughalter befestigt sein.

Der Werkzeughalter kann einen Aufnahmestutzen für einen Schlauch einer Spanabsaugung aufweisen. Dabei kann der Aufnahmestutzen in einen Durchlass des Werkzeughalters münden, durch welchen hindurch ein Werkzeug des Werkzeuggeräts aus dem Werkzeughalter herausragt.

Der Werkzeughalter kann einen Hubkorb aufweisen, von dem das Werkzeuggerät gehalten ist, wobei der Hubkorb über eine Führung, beispielsweise über eine Zwei-Säulen-Führung, senkrecht zu einer Aufstandsfläche einer Basis des Werkzeughalters, über welche der Werkzeughalter auf einem flächigen zu bearbeitenden Werkstück aufsteht, verstellbar ist.

Wenn der Werkzeughalter eine Aufstandsfläche aufweist, über welche das Werkzeugmodul auf einem zu bearbeitenden, flächigen und magnetischen oder magnetisierbaren Werkstück aufsteht, kann vorgesehen sein, dass das Werkzeugmodul ein Magnetelement aufweist, dessen in der Ebene der Aufstandsfläche wirkende magnetische Anziehungskraft einstellbar ist.

Das Magnetelement kann eine einstellbare magnetische Feldstärke und/oder einen einstellbaren Abstand zu der Aufstandsfläche aufweisen.

Weitere Einzelheiten der Erfindung werden anhand der nachstehenden Figuren erläutert. Dabei zeigt:
- Figur 1: eine erste Ausführungsform eines erfindungsgemäßen Werkzeugmoduls;
- Figur 2: eine erste Ausführungsform einer erfindungsgemäßen Anordnung;
- Figur 3: eine Explosionsdarstellung des Werkzeugmoduls der Anordnung gemäß Figur 2;
- Figur 4: eine weitere Ausführungsform eines erfindungsgemäßen Werkzeugmoduls;
- Figur 5: eine weitere Ausführungsform einer erfindungsgemäßen Anordnung unter Verwendung des Werkzeugmoduls gemäß Figur 4;
- Figur 6: eine Ausführungsform eines Werkzeughalters; und
- Figur 7: eine weitere Ausführungsform eines erfindungsgemäßen Werkzeugmoduls unter Verwendung des Werkzeughalters gemäß Figur 6.

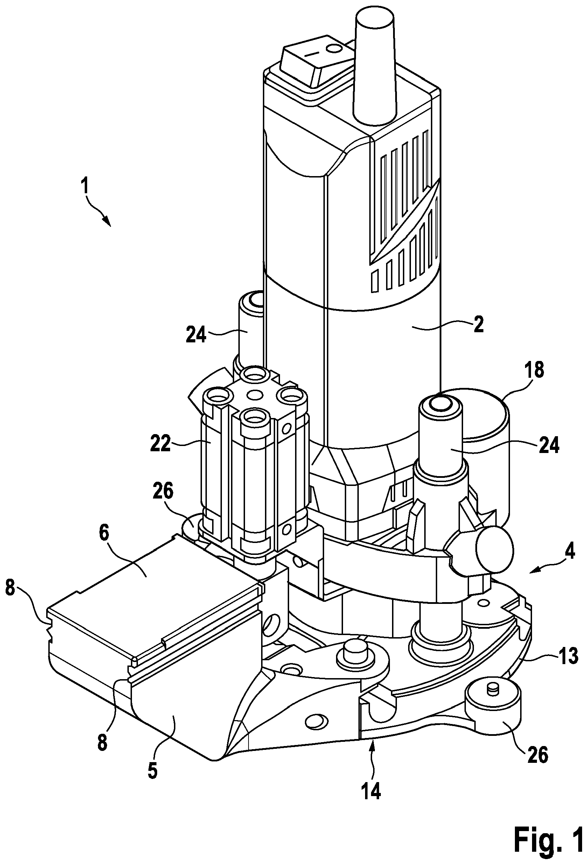

Bei der in Figur 1 gezeigten Ausführungsform eines Werkzeugmoduls 1 ist das Werkzeuggerät 2 als eine Oberfräse ausgebildet. Das Werkzeuggerät 2 weist ein angetriebenes Werkzeug auf, im vorliegenden Falle einen Fräskopf. Der Fräskopf ist dazu eingerichtet, ein Schaltschrankgehäuse oder ein Schaltschrankflachteil zu bearbeiten, etwa um Ausbrüche in eine Seitenwand des Schaltschrankgehäuses einzubringen oder um eine Montageplatte für die Bestückung der Montageplatte mit Komponenten zur Ausbildung einer elektrischen Schaltanlage vorzubereiten.

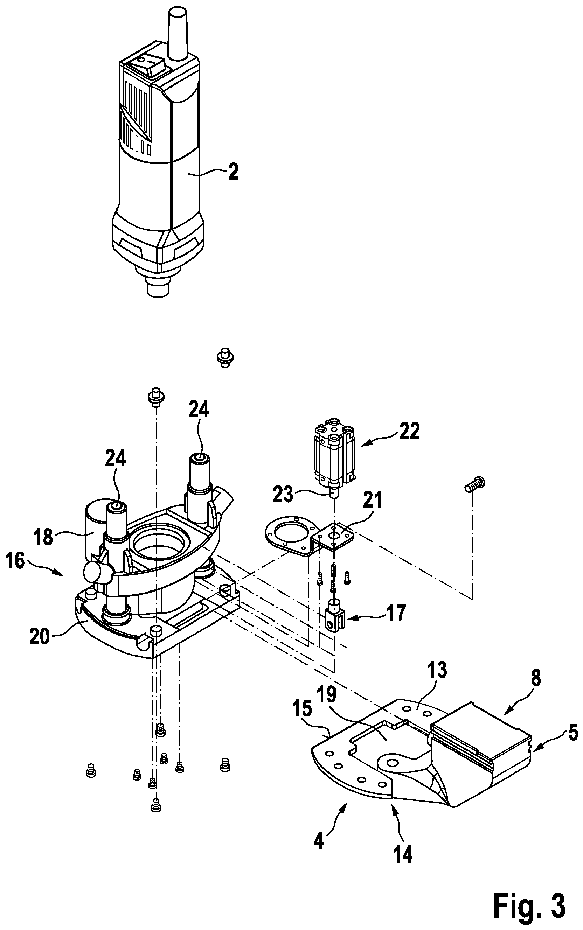

Das Werkzeuggerät 2 ist an einem Werkzeughalter 4 lösbar befestigt. Beispielsweise kann das Werkzeuggerät 2 mit dem Werkzeughalter 4 verschraubt sein, analog zu der Ausführungsform gemäß Figur 3. Der Werkzeughalter 4 weist an seiner Außenseite eine Kupplung 5 für die Verbindung des Werkzeughalters 4 mit einem Roboter und für die Trennung des Werkzeughalters von dem Roboter auf, sodass das Werkzeugmodul 1 von dem Roboter bedarfsweise gegriffen und wieder abgesetzt werden kann.

Insbesondere für die Bearbeitung von Schaltschrankgehäusen und Schaltschrankflachteilen ist es häufig erforderlich, dass unterschiedliche Werkzeuggeräte verwendet werden, beispielsweise kann eine Fräse dazu verwendet werden, um Ausschnitte in das Schaltschrankflachteil bzw. das Schaltschrankgehäuse einzubringen, ein Bohrgerät kann dazu verwendet werden, um Löcher in die zuvor genannten Schaltschrankkomponenten einzubringen, ein Gewindeschneidgerät kann dazu vorgesehen sein, um Gewinde in zuvor eingebrachte Bohrlöcher einzuschneiden, ein Nietgerät kann dazu verwendet werden, um Komponenten an dem Schaltschrankflachteil bzw. Schaltschrankgehäuse zu befestigen, und dergleichen. Die gezeigte Anordnung ermöglicht es insbesondere bei der Bereitstellung einer Vielzahl der zuvor genannten und weiterer Werkzeugmodule, dass mithilfe des Roboters ein erforderliches Werkzeugmodul gegriffen und für die Bearbeitung des Schaltschrankgehäuses und/oder Schaltschrankflachteils der betreffenden Komponente zugeführt und in Bezug auf die Komponente geführt werden kann, um eine entsprechende Bearbeitung des Schaltschrankgehäuses oder des Schaltschrankflachteils zu realisieren.

Die Kupplung 5 weist ein Adapterstück 6 auf, welches an der Außenseite des Werkzeughalters 4 frei zugänglich für einen Roboter angeordnet ist. Das Adapterstück 6 weist eine Außengeometrie 8 auf, die einem Negativ einer Greifergeometrie an einer Innenseite eines Greifers des Roboters entspricht.

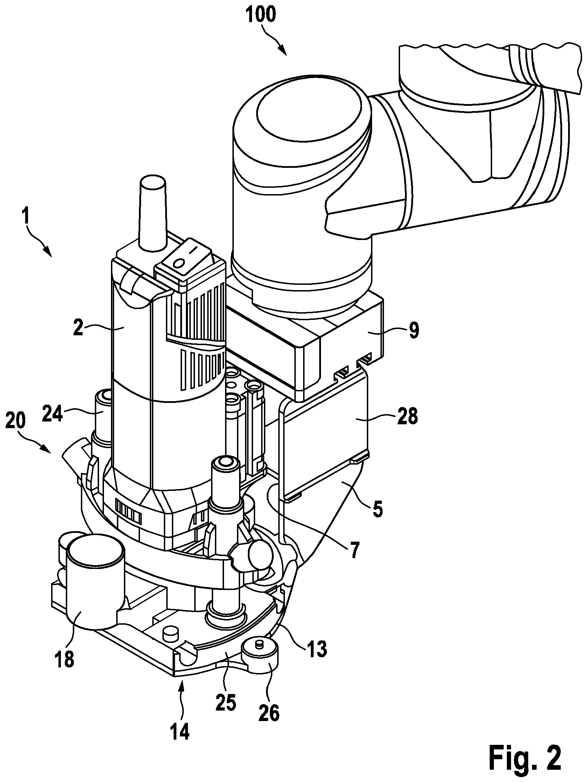

Analog zu der in Figur 2 gezeigten Ausführungsform und wie es auch in der DE 10 2019 123 245 A1 beschrieben ist, kann der Greifer 9 zwei Greiferbacken 28 aufweisen, die linear zueinander verstellbar sind, sodass sich ein senkrechter Abstand der im Wesentlichen plattenförmig ausgebildeten Greiferbacken 28 einstellen lässt. Auf diese Weise kann über die an gegenüberliegenden Außenseiten des Adapterstück 6 angebrachten Außengeometrien 8 ein sicheres Greifen des Werkzeugmoduls mit dem Roboter 100 (vergleiche Figur 2) erreicht werden. Dazu kann der Greifer 9 an den einander zugewandten Innenseiten der Greiferbacken 28 eine Greifergeometrie 7 aufweisen, die einem Negativ der Außengeometrien 8 entspricht.

Wie zu erkennen ist, ist das Werkzeuggerät 2 im Wesentlichen als eine handelsübliche Oberfräse ausgebildet, die unter Verwendung des Werkzeughalters 4 für die Handhabung durch einen Roboter 100 adaptiert ist. Der Werkzeughalter 4 mit der Kupplung 5 weist eine Flanschplatte 13 auf, auf der das Werkzeuggerät 2 montiert ist. Die Flanschplatte 13 weist eine Aufstandsfläche 14 auf, über die das Werkzeuggerät 2 auf einem zu bearbeitenden Werkstück aufgesetzt werden kann.

Das an dem Werkzeughalter 4 einteilig angeformte Adapterstück 6 ist an einer von der Aufstandsfläche 14 abgewandten Seite der Flanschplatte 13 erhaben ausgebildet. Die Flanschplatte 13 weist an der von der Aufstandsfläche 14 abgewandten Oberseite eine Montagefläche 15 auf, auf der ein Hubkorb 16 des Werkzeuggeräts 2 montiert ist. Der Hubkorb 16 kann über eine Aufstandsfläche auf der Montagefläche 15 aufstehen. Die Aufstandsfläche des Hubkorbs kann insbesondere diejenige Aufstandsfläche des Werkzeuggeräts 2 sein, über welche das Werkzeuggerät auf einem zu bearbeitenden Werkstück aufsteht, wenn das Werkzeuggerät, beispielsweise eine Oberfräse, in seiner originären Weise, d. h. insbesondere nicht erfindungsgemäß, verwendet wird.

In der zuvor beschriebenen Weise wird, wie in Figur 2 veranschaulicht ist, ein Werkzeugmodul 1 bereitgestellt, welches eine Aufstandsfläche 14 aufweist, über welche das Werkzeugmodul 1 auf einem zu bearbeitenden, flächigen Werkstück aufstehen kann. Das Werkzeugmodul 1 kann darüber hinaus eine Hub-und Senkeinrichtung 20 aufweisen, mithilfe welcher das Werkzeuggerät 2 oder zumindest ein Werkzeug des Werkzeuggeräts 2, beispielsweise ein Fräskopf, senkrecht zu der Aufstandsfläche 14 verstellt werden kann.

Wie in Figur 3 gezeigt ist, kann das Werkzeugmodul 1 ein Halteelement 21 aufweisen, über den eine Linearstelleinheit 22, beispielsweise ein Pneumatik- oder Hydraulikzylinder, an einem Hubkorb 16 des Werkzeuggeräts befestigt ist, wobei ein linearverstellbarer Kolben 23 der Linearstelleinheit in Verstellrichtung des Hubkorbs 16 verstellbar und mit seinem freien Ende 17 an dem Werkzeughalter 4 befestigt ist. Auf diese Weise wird ein Antrieb für die bedarfsweise Verstellung des Hubkorbs 16 realisiert. Eine Spanabsaugung kann dadurch realisiert sein, dass der Werkzeughalter 4 einen Aufnahmestutzen 18 für einen Schlauch einer Spanabsaugung aufweist. Der Aufnahmestutzen 18 mündet in einen Durchlass 19 des Werkzeughalters 4, durch welchen hindurch das Werkzeug 3 des Werkzeuggeräts 2 aus dem Werkzeughalter 4 herausragt.

Der Hubkorb 16 weist eine Führung 24 auf, die als eine Zwei-Säulen-Führung ausgebildet ist, und mithilfe welcher das Werkzeuggerät 2 senkrecht zu der Aufstandsfläche 14 der Basis 25 des Werkzeughalters 4 verstellbar ist.

Um eine Fixierung des Werkzeugmoduls 1 auf dem zu bearbeitenden Werkstück zu realisieren, beispielsweise auf einem Schaltschrankflachteils oder einem Schaltschrankgehäuse, kann vorgesehen sein, dass das Werkzeugmodul 1 ein Magnetelement 26 aufweist, dessen in der Ebene der Aufstandsfläche 14 wirkende magnetische Anziehungskraft einstellbar ist. Die Verstellbarkeit kann alternativ oder additiv im Wesentlichen auf Grundlage zweier unterschiedlicher Prinzipien erreicht werden. Einerseits kann das mindestens eine Magnetelement eine einstellbare magnetische Feldstärke aufweisen, wozu das Magnetelement beispielsweise als ein Elektromagnet mit einstellbarem Spulenstrom sein kann, und andererseits kann das Magnetelement als ein Permanentmagnet ausgebildet sein, dessen Abstand zu der Aufstandsfläche 14 einstellbar ist. Es können auch Magnetelemente 26 vorgesehen sein, die sowohl einen Permanentmagneten, der räumlich verstellbar in Bezug auf die Aufstandsfläche 14 ist, und zusätzlich einen Elektromagneten mit über die Variation der Stromstärke einstellbarer magnetischer Feldstärke aufweist.

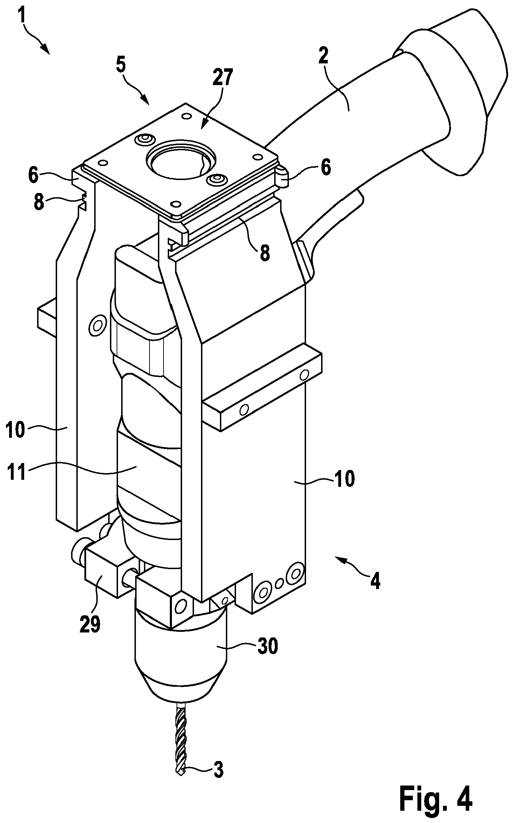

Bei der in Figur 4 gezeigten Ausführungsform eines alternativen Werkzeugmoduls 1 ist das Werkzeuggerät 2 als eine handelsübliche Handbohrmaschine und das Werkzeug 3 entsprechend als ein Bohr ausgebildet. Der Werkzeughalter 4 ist zweiteilig ausgeführt, mit einer ersten und einer zweiten Werkzeughalterhälfte 10. Die Werkzeughalterhälften 10 fassen zwischen sich ein Gehäuse des Werkzeuggeräts 2 ein.

An einem Übergang von dem Gehäuse des Werkzeuggeräts 2 zu einem Bohrfutter 30 des Werkzeuggeräts 2 sind die beiden Werkzeughalterhälften 10 über eine Klemme 29 miteinander verbunden. Dazu ist die Klemme 29 wiederum zweiteilig ausgeführt, wobei sich von den einander zugewandten Innenseiten der beiden Werkzeughalterhälften 10 je Werkzeughalterhälfte 10 eine Klemmenhälfte der Klemme aufeinander zu erstrecken und an dem Übergang von dem Gehäuse zu dem Bohrfutter 30 derart miteinander verbunden sind, dass das Gehäuse auf den beiden Klemmenhälften der Klemme 29 aufliegt.

An dem der Klemme 29 gegenüberliegend angeordneten Ende des Werkzeughalters 4 sind die beiden Werkzeughalterhälften 10 zusätzlich an der Kupplung 5 lösbar miteinander verbunden. Dazu ist jeweils ein Teilstück des Adapterstücks 6 an jeder der beiden Werkzeughalterhälften 10 ausgebildet, die über einen Verbindungsflansch 27 unter einem Abstand zueinander festgelegt sind.

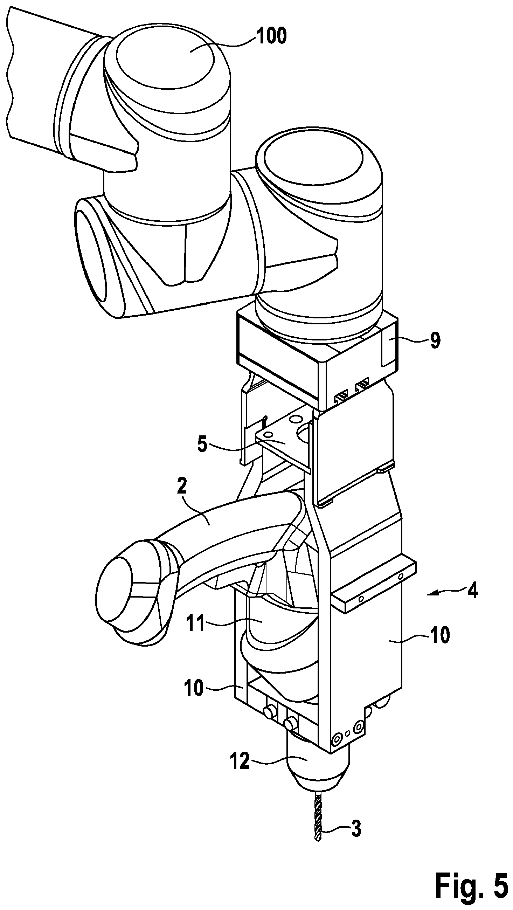

In der Zusammenschau der Figuren 2 und 5 ist zu erkennen, dass im Wesentlichen derselbe Roboter 100 mit identisch ausgebildetem Greifer 9 dazu verwendet werden kann, einerseits das als Fräsmodul ausgebildete Werkzeuggerät 2 der Ausführungsform gemäß Figur 2 und andererseits das als Bohrmodul ausgebildete Werkzeuggeräts 2 der Ausführungsform gemäß Figur 5 zu greifen und für die Bearbeitung eines Schaltschrankflachteils oder eines Schaltschrankgehäuses zu manövrieren. Analog zu den Ausführungsformen gemäß den Figuren 2 und 5 können auch andere Werkzeuggerät 2 für die Handhabung durch den Roboter 100 konditioniert werden.

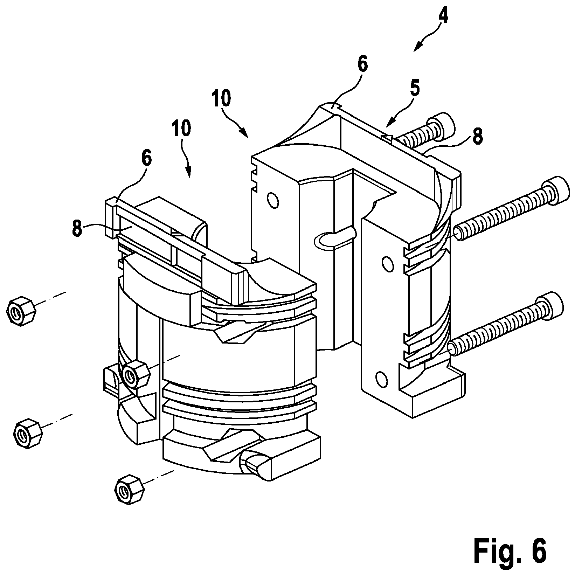

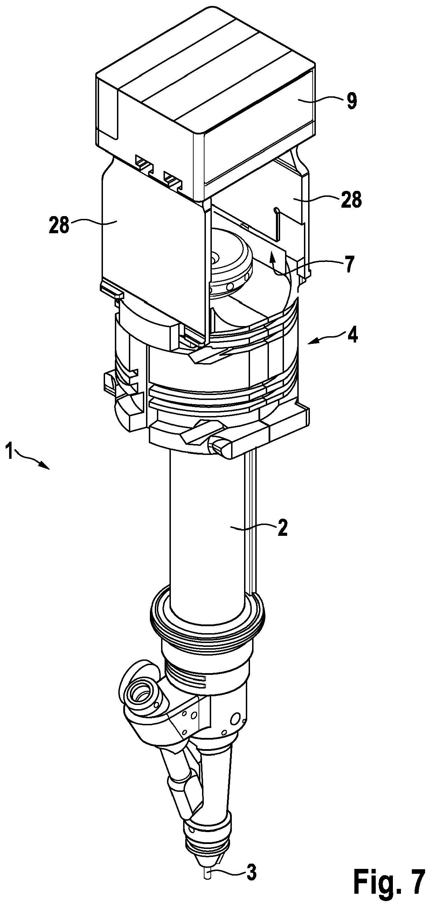

Beispielsweise zeigt die Zusammenschau der Figuren 6 und 7 einen zweiteiligen Werkzeughalter 4 mit zwei Werkzeughalterhälften 10, bei denen an gegenüberliegenden, endseitigen Außenseiten jeweils ein Adapterstück 6 und voneinander abgewandte Außengeometrien 8 ausgebildet sind. Mithin ist auch das Adapterstück 6 analog zu der Ausführungsform gemäß Figur 4 zweiteilig ausgeführt, mit einem ersten Teilstück, welches einer ersten der beiden Werkzeughalterhälften 10 zugeordnet ist, und einem zweiten Teilstück, welches einer zweiten der Werkzeughalterhälften 10 zugeordnet ist.

Zur Verwendung des bereits mit Bezug auf die vorangegangenen Ausführungsformen beschriebenen Greifers 9, welcher zwei senkrecht zueinander linearverstellbarer plattenförmigen Greiferbacken 28 aufweist, ist auch bei der Ausführungsform des Werkzeughalters 4 gemäß Figur 6 wiederum vorgesehen, dass die beiden Außengeometrien 8 der Adapterstückteile an voneinander abgewandten Außenseiten der Werkzeughalterhälften 10 ausgebildet sind und eine Kontur aufweisen, die im Wesentlichen einem Negativ einer Greifergeometrie 7 an den einander zugewandten Innenseiten der Greiferbacken 28 entspricht.

Bei der Ausführungsform gemäß Figur 7 ist das Werkzeuggerät 2 als ein Nietgerät ausgebildet, welches an seinem von dem Werkzeug 3 abgewandten Ende von dem Werkzeughalter 4 eingefasst ist, in dem das von dem Werkzeug 3 abgewandte Ende des Nietgeräts zwischen den Hälften 10 des Werkzeughalters aufgenommen ist, wobei eine kraftschlüssige Verbindung zwischen dem Werkzeughalter 4 und dem Werkzeuggerät 2 hergestellt und damit ein sicheres Manövrieren des Werkzeuggeräts 2 mithilfe eines Roboters möglich ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste:**

| | | | |
|---|---|---|---|
| 1 | Werkzeugmodul | 27 | Verbindungsflansch |
| 2 | Werkzeuggerät | 28 | Greiferbacken |
| 3 | Werkzeug | 29 | Klemme |
| 4 | Werkzeughalter | 30 | Bohrfutter |
| 5 | Kupplung | 100 | Roboter |
| 6 | Adapterstück | | |
| 7 | Greifergeometrie | | |
| 8 | Außengeometrie | | |
| 9 | Greifer | | |
| 10 | Werkzeughalterhälfte | | |
| 11 | Gehäuse | | |
| 12 | Spannfutter | | |
| 13 | Flanschplatte | | |
| 14 | Aufstandsfläche | | |
| 15 | Montagefläche | | |
| 16 | Hubkorb | | |
| 17 | freies Ende | | |
| 18 | Aufnahmestutzen | | |
| 19 | Durchlass | | |
| 20 | Hub- und Senkeinrichtung | | |
| 21 | Halteelement | | |
| 22 | Linearstelleinheit | | |
| 23 | Kolben | | |
| 24 | Führung | | |
| 25 | Basis | | |
| 26 | Magnetelement | | |

## Patentansprüche

1. Anordnung für die Bearbeitung eines Schaltschrankgehäuses oder eines Schaltschrankflachteils, mit einem Roboter (100) und einem von dem Roboter (100) gehaltenen Werkzeugmodul (1), das ein Werkzeuggerät (2) mit einem angetriebenen Werkzeug (3) für die Bearbeitung eines Metallwerkstoffs aufweist, wobei das Werkzeuggerät (2) an einem Werkzeughalter (4) lösbar befestigt ist, **dadurch gekennzeichnet, dass** der Werkzeughalter (4) an seiner Außenseite eine Kupplung (5) für die Verbindung des Werkzeughalters (4) mit dem Roboter (100) und für die Trennung des Werkzeughalters (4) von dem Roboter (100) aufweist.

2. Anordnung nach Anspruch 1, bei der die Kupplung (5) ein Adapterstück (6) mit einer Außengeometrie (8) aufweist, die einem Negativ einer Greifergeometrie (7) an einer Innenseite eines Greifers (9) des Roboters (100) entspricht.

3. Anordnung nach Anspruch 2, bei der das Adapterstück (6) einteilig an den Werkzeughalter (4) angeformt ist.

4. Anordnung nach einem der vorangegangenen Ansprüche, bei der das Werkzeuggerät (2) ein Werkzeuggerät (2) für die Einhandbedienung oder für die Zweihandbedienung ist, vorzugsweise eine Handbohrmaschine, ein Handnietgerät, ein Gewindeschneidgerät, oder eine Oberfräse.

5. Anordnung nach einem der vorangegangenen Ansprüche, bei der der Werkzeughalter (4) zweiteilig ausgeführt ist, mit einer ersten und einer zweiten Werkzeughalterhälfte (10), die ein Gehäuse (11) des Werkzeuggeräts (2) an gegenüberliegenden Seiten einfassen, wobei die Werkzeughälften (10) vorzugsweise als Gleichteile ausgebildet sind.

6. Anordnung nach Anspruch 5, bei der die Werkzeughalterhälften (10) am Übergang eines Spannfutters (12) für das Werkzeug (3) in das Gehäuse (11) miteinander verbunden sind.

7. Anordnung nach Anspruch 5 oder 6, bei der die Werkzeughalterhälften (10) an der Kupplung (5) lösbar miteinander verbunden sind, wozu vorzugsweise jeweils ein Teilstück des Adapterstücks (6) an jeder der beiden Werkzeughalterhälften (10) ausgebildet ist, und wobei die Teilstücke über einen Verbindungsflansch (27) unter einem Abstand zueinander festgelegt sind.

8. Anordnung nach einem der vorangegangenen Ansprüche, bei der ein Adapterstück (6) der Kupplung (5) eine Außengeometrie (8) aufweist, die einem Negativ einer Greifergeometrie (7) an einer Innenseite eines Greifers (9) des Roboters (100) entspricht, wobei die Außengeometrie (8) anteilig an einer ersten und an einer zweiten Werkzeughalterhälfte (10) des Werkzeughalters (4) ausgebildet ist.

9. Anordnung nach einem der vorangegangenen Ansprüche, bei der der Werkzeughalter (4) mit der Kupplung (5) eine Flanschplatte (13) aufweist, auf der das Werkzeuggerät (2) montiert ist und die eine Aufstandsfläche (14) aufweist, über die das Werkzeuggerät (2) auf einem zu bearbeitenden Werkstück aufgesetzt werden kann.

10. Anordnung nach Anspruch 9, bei der die Flanschplatte (13) an einer von der Aufstandsfläche (14) abgewandten Seite ein erhabenes Adapterstück (6) der Kupplung (5) aufweist, das vorzugsweise einteilig an die Flanschplatte (13) angeformt ist und eine Außengeometrie (8) aufweist, die einem Negativ einer Greifergeometrie (7) an einer Innenseite eines Greifers (9) des Roboters (100) entspricht.

11. Anordnung nach Anspruch 9 oder 10, bei der die Flanschplatte (13) an einer von der Aufstandsfläche (14) abgewandten Seite eine Montagefläche (15) aufweist, auf der ein Hubkorb (16) des Werkzeuggeräts (2), vorzugsweise ein Hubkorb (16) einer Oberfräse, einer Bohrmaschine, oder einer Gewindeschneidmaschine, montiert ist.

12. Anordnung nach einem der vorangegangenen Ansprüche, bei der der Werkzeughalter (4) eine Aufstandsfläche (14) aufweist, über welche das Werkzeugmodul (1) auf einem zu bearbeitenden, flächigen Werkstück aufsteht, wobei das Werkzeugmodul (1) eine pneumatisch, hydraulisch oder elektrisch angetriebene Hub- und Senkeinrichtung (20) aufweist, mithilfe welcher das Werkzeuggerät (2) oder zumindest ein Werkzeug (3) des Werkzeuggeräts (2) senkrecht zu der Aufstandsfläche (14) verstellt werden kann.

13. Anordnung nach einem der vorangegangenen Ansprüche, bei der das Werkzeugmodul (1) ein Halteelement (21) aufweist, über den eine Linearstelleinheit (22), beispielsweise ein Pneumatik- oder Hydraulikzylinder, an einem Hubkorb (16) des Werkzeuggeräts (2) befestigt ist, wobei ein linear verstellbarer Kolben (23) der Linearstelleinheit (22) in Verstellrichtung des Hubkorbs (16) verstellbar und mit seinem freien Ende (17) an dem Werkzeughalter (4) befestigt ist.

14. Anordnung nach einem der vorangegangenen Ansprüche, bei der der Werkzeughalter (4) einen Aufnahmestutzen (18) für einen Schlauch einer Spanabsaugung aufweist, wobei der Aufnahmestutzen (18) in einen Durchlass (19) des Werkzeughalters (4) mündet, durch welchen hindurch ein Werkzeug (3) des Werkzeuggeräts (2) aus dem Werkzeughalter (4) herausragt.

15. Anordnung nach einem der vorangegangenen Ansprüche, bei der der Werkzeughalter (4) einen Hubkorb (16) aufweist, von dem das Werkzeuggerät (2) gehalten ist, wobei der Hubkorb (16) über eine Führung (24), vorzugsweise über eine 2-Säulen-Führung, senkrecht zu einer Aufstandsfläche (14) einer Basis (25) des Werkzeughalter (4), über welche der Werkzeughalter (4) auf einem flächigen zu bearbeitenden Werkstück aufsteht, verstellbar ist.

16. Anordnung nach einem der vorangegangenen Ansprüche, bei der der Werkzeughalter (4) eine Aufstandsfläche (14) aufweist, über welche das Werkzeugmodul (1) auf einem zu bearbeitenden, flächigen und magnetischen oder magnetisierbaren Werkstück aufsteht, wobei das Werkzeugmodul (1) ein Magnetelement (26) aufweist, dessen in der Ebene der Aufstandsfläche (14) wirkende magnetische Anziehungskraft einstellbar ist.

17. Anordnung nach Anspruch 16, bei der das Magnetelement (26) eine einstellbare magnetische Feldstärke und/oder einen einstellbaren Abstand zu der Aufstandsfläche (14) aufweist.
